# EUROPEAN PATENT APPLICATION

(11) **EP 1 570 984 A1**
(43) Date of publication of application: **07.09.2005**
(21) Application number: 04251176.6
(22) Date of filing: 01.03.2004
(51) Int. Cl.: B32B 31/00, B32B 5/28, B32B 27/04, B32B 17/04, B44C 5/04, E04C 2/00

(54) **Lighter-weight reinforced decorative composite material**

(71) Applicant: Kemlite Company, Inc., Channahon, Illinois 60410 (US)
(72) Inventor: Taylor, Stephen J., Massillon, Ohio 44647 (US)
(74) Representative: Beresford, Keith Denis Lewis

(57) **Abstract**

A reinforced composite material includes a decorative layer, and a strengthening panel, preferably directly fused to each other. The decorative layer is preferably made of one to three layers of (preferably printed) paper impregnated with a resin such as polyester or melamine resin. The strengthening panel may have a foil facing on one surface for fusion to the decorative layer, or may be roughed and directly fused to the decorative layer without such foil facing.
Also provided is a method for the production of such a material.

## Description

### BACKGROUND OF THE INVENTION

### 1. Field of the Invention

The present invention relates generally to construction materials and more particularly to a reinforced decorative composite material that includes a light-weight material, preferably decorative, such as a small number of layers of resin-impregnated paper, and a strengthening panel such as fiberglass reinforced plastic ("FRP") secured together, and to the manufacture of such a composite material.

### 2. Description of Related Art

High pressure laminate materials have been manufactured and sold for many years, and are familiar to many from their wide-spread use in kitchens and areas requiring very durable and decorative surface attributes. Such laminates are typically made of layers of paper impregnated with resin, compressed in a press or the like and heated to produce the desired laminate. One layer of paper may have a decorative pattern that remains visible in the fmished product. The exact types of paper and of resins used, as well as the pressures, equipment and temperatures used, and the precise order of steps, are well known to those in the art. Typically, five to seven layers of paper may be incorporated in such a laminate material. A great variety of products of this type are commercially available from the Formica Corporation, under the trademark Formica, owned by that company. Examples of techniques and materials used in the manufacture of such laminates can be found in U.S. Patent 5,558,906, assigned on its face to Formica Technology Inc., the entire disclosure of which is incorporated herein by reference, although it is to be understood that the present inventor does not claim ownership of the processes claimed in that patent, which are believed to be owned by that patent's assignee of record.

HPL products, however, are generally brittle enough that they must be mounted on a layer of wood or other material of sufficient strength and rigidity, for use in the kitchen, and on any horizontal surface. Vertical surface applications of HPL's can be enhanced by a pre-laminated panel with the HPL as the outward side. A primary application of such a panel will likely be vertical wall surfaces, where drywall is a common substrate.

It is desirable to be able to use HPL products in environments where the product will be exposed to relatively high levels of wear and tear, moisture, and mechanical loads, without the need to mount the HPL on a mechanically strong layer of wood or other materials. For example, it would be desirable to be able to use decorative materials like HPL products in vertical wall applications in schools, hospitals, restaurants and other public areas that are subject to large amounts of traffic, and where conventional HPL cannot easily be used.

The present inventor has reduced to practice an invention which meets that object, and has disclosed that invention in his previously-filed patent application (US 2003/0157850 A1, filed February 20, 2002), the entire content of which is incorporated herein below. One aspect of that invention is a reinforced composite material that includes a laminate panel, a strengthening panel that includes a reinforcement embedded therein, and a layer of adhesive disposed between the laminate panel and the strengthening panel to adhere the laminate panel and the strengthening panel together. Preferably, the reinforcement in the strengthening panel may be fiberglass fibers, randomly oriented, or it may be provided in the form of a mesh or the like. In either case, the strengthening panel is preferably a plastic (polymeric) material of the type known as fiberglass reinforced polyester.

Nonetheless, it would be desirable to provide still greater improvements of the inventor's previous work.

The inventor notes the existence of existing products that have a wood/fiber core to which melamine-resin impregnated paper is secured. To the inventor's knowledge, however, no one has previously considered, or succeeded in, directly fusing papers or foil to a fiberglass-reinforced plastic panel.

### SUMMARY OF THE INVENTION

Accordingly, one object of the present invention is to provide a material that will have the aesthetic qualities of HPL, can be easily installed on vertical surfaces, and is both lighter in weight and less expensive to manufacture, or both, than is Kemlite's previously-disclosed composite material made from an HPL panel and an FRP or similar strengthening panel. It is also an object to provide such a material that will have sufficient mechanical strength for use in situations where conventional HPL products might not otherwise be usable, such as wall panel applications without a substantial structural substrate.

Of primary importance, and in common with the present inventor's mentioned prior invention, the present invention provides a panel which is installer-friendly and combines the custom color/pattern flexibility of an HPL face with a water-proof, dimensionally stable, user-friendly backer. Further, this laminated panel enhances the impact resistance and moisture resistance of known available decorative vertical wall panels. The subject panel will allow installation of an HPL vertical surface in a most expeditious manner saving labor costs in two ways: drywall preparation, and actual installation time of the panel, when compared to applying HPL directly over drywall.

These objects are met by the present invention, one aspect of which is a reinforced composite material that includes a decorative layer, a strengthening panel that includes a reinforcement embedded therein, and a suitable means of securing the decorative layer and the strengthening panel together permanently. Most preferably, this securing function is achieved by direct thermal fusion of the decorative layer and the strengthening panel to each other, although it is also within the scope of the invention to include one or more additional materials between the decorative layer and the strengthening panel. Preferably, the reinforcement in the strengthening panel may be fiberglass fibers, randomly oriented, or it may be provided in the form of a mesh or the like. In either case, the strengthening panel is preferably a plastic (polymeric) material of the type known as fiberglass reinforced polyester. The thicknesses of the layers may be selected according to need but, as examples, the decorative layer may be made from, typically, one layer of paper (although greater numbers of layers are within the scope of the invention), impregnated with resin and fused with the strengthening panel at a temperature and pressure for sufficiently long to result in the permanent fusion of the plural layers of paper (if more than one are used). The strengthening panel may for example be 0.76, 1.52 or 2.29 mm (.030, .060 or .090 inch) thick, although the invention is not limited to these specific numbers of papers and thicknesses.

It will be appreciated that one aspect of the present invention involves reducing the weight of the reinforced composite material, by using a small number of sheets or layers of paper in the decorative layer, for example, preferably one, rather than the much larger numbers typically used in existing HPL products (often five to seven layers). Another aspect of the invention is the direct fusing of the decorative layer to the strengthening panel, permitting one to forego the expense and additional materials involved in using an adhesive layer as in the inventor's prior material. It is of course particularly preferred to use both aspects of the invention together, in order to get the maximum benefit, but either may be used without the other if desired, without departing from the scope of the invention.

The present invention also provides a method for the production of such a material, in which there are provided a decorative layer of a type made by preparing at least a first layer of paper and quantity of resin, and a strengthening panel of a type made by embedding a reinforcement in a layer of a binder material. Then, the decorative layer is permanently secured to the strengthening panel, preferably by direct thermal fusion, which is effected by heating the decorative layer and strengthening panel, while subjecting them to pressure.

These and other objects, features and advantages of the present invention will be more fully apparent from a consideration of the following detailed description of the preferred embodiments, taken in conjunction with the accompanying drawings.

### BRIEF DESCRIPTION OF THE DRAWINGS

Fig. 1 is a view of a preferred embodiment of a composite material according to the present invention.
Figs. 2a and 2b are details showing two varieties of FRP that may be used in the embodiment shown in Fig. 1.
Figs. 3 a and 3b are schematic illustrations of a method according to the present invention.
Fig. 4 is a chart illustrating a method of manufacturing a material according to the present invention.
Figs. 5a and 5b are schematic illustrations of a variation of the method according to the present invention.
Fig. 6 is a view of a further embodiment of composite material.
Figs. 7a and 7b are details showing two further varieties of FRP that may be used in the embodiment shown in Figure 6.
Fig. 8 is a chart illustrating a method of manufacturing a material according to the embodiment shown in Figure 6.

### DESCRIPTION OF THE PREFERRED EMBODIMENTS

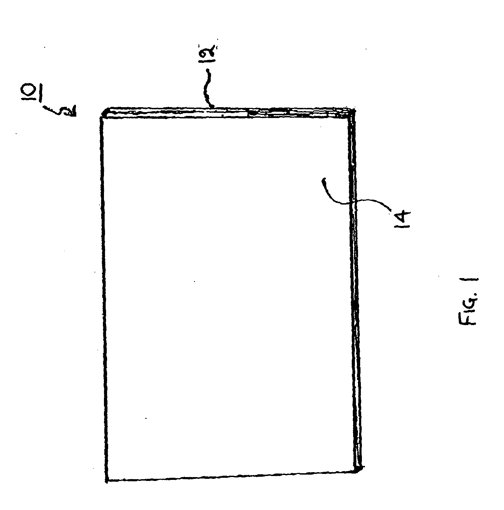

The first preferred embodiment of the present invention is a reinforced composite material 10 having two layers 12 and 14, as shown in Fig. 1. One of the layers 12 is termed herein a decorative layer, and the other of the layers 14 is a sheet or panel of a reinforced material. The reinforced material 14 may be a FRP material of a type available from Kemlite Company, while the other layer 12 is made of a small number of sheets of resin-impregnated paper pressed together into a single layer. (Some techniques and materials for use in for the manufacture of such FRP are disclosed in commonly-assigned U.S. Patents 4,278,491, 4,110,151, 4,098,630 and 4,048,887.)

The types of paper that may be used in the decorative layer include all those types suitable for use in high pressure laminates (HPL), low pressure laminates (LPL), and saturated papers typically used in thermal fusing operations. In general, one layer of paper may have a decorative pattern on the side facing away from the FRP, so as to be visible in the finished product. Also, while any type of resin suitable for the purpose can be used within the scope of the invention, including any such resins used in manufacturing HPL, the inventor prefers that a polyester or melamine resin be used, and particularly prefers polyester resins, for the reasons described below.

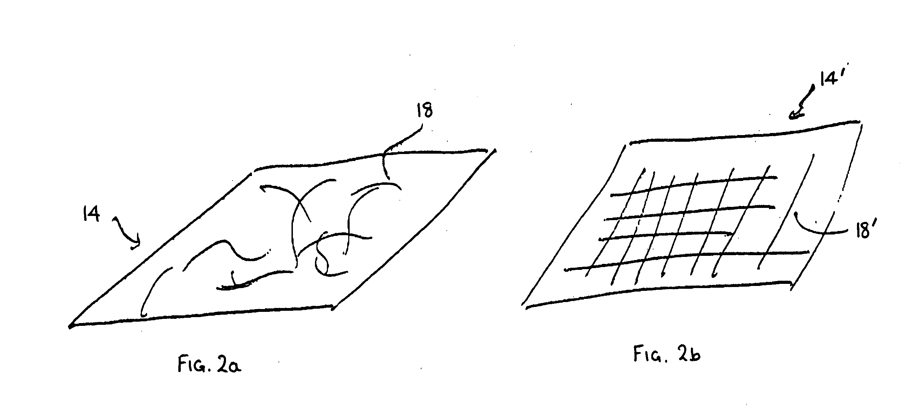

While it is preferred to use a sheet of FRP material for the reinforcing sheet, it is also possible to use other types of reinforced plastic. For example, a plastic sheet 14' having reinforcing material in the form of a mesh 18', rather than in the form of randomly-oriented fiberglass 18, as in FRP, forms a second preferred embodiment of the invention. Figs. 2a and 2b indicate these two types of material for use in the composite material shown in Fig. 1. In addition, both types of reinforcement may be used together.

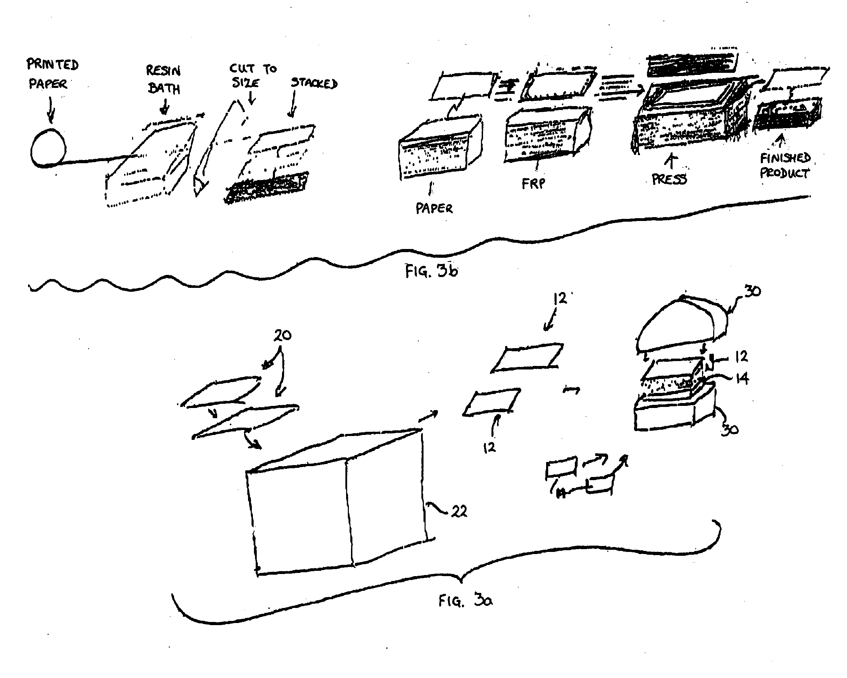

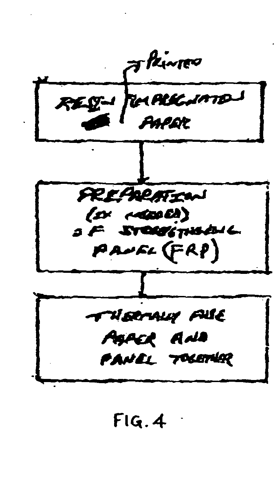

The method of manufacturing the composite material shown in Fig. 1 is straightforward, and is illustrated schematically in Figs. 3a and 3b (a flow chart of the process is shown in Fig. 4). First, one selects the appropriate decorative-layer materials and reinforced plastic materials to use as the layers. While these materials may be custom manufactured, the FRP material may be a commercially available material instead, as stated above. The printed or plain paper(s) to be used are selected, or are otherwise provided with the desired decorative pattern or coloration (or may, if desired, be left as is; this alternative also is within the scope of the invention). The layers of paper 20 to be used, which are typically but not necessarily one in number per strengthening panel, are then impregnated with the selected resin, for example, by being passed through in a bath 22 of the resin. The saturated paper is then placed above or below the strengthening panel 14 and, in standard thermofusing equipment (indicated schematically at 30), pressed into the composite material 10. For polyester resin, for example, a pressure of 1.7-2.1 MPa (250 - 300 pounds per square inch ("psi")) and a temperature of 93.3-148.9 °C ( 200 - 300° F) have been found to be suitable. A dwell time of 15 - 20 seconds is adequate, which is less than is required for conventional HPL products, and thus represents a saving in manufacturing processing time. Melamine-resin saturated paper requires slightly higher pressure (e.g., 2.4 MPa (325 psi)) and temperatures (e.g., 176.7 °C ( 350° F)) than are used for polyester-saturated papers.

The saturated paper has a shelf life of about 90 days, within which time it should be used.

It is within the scope of the invention to prepare the surface of the strengthening panel by roughening, for example, by means of sanding; thermofusing the panel with the paper without roughening or other surface preparation is also within the invention.

The thicknesses of the layers of the light-weight reinforced composite material may be selected according to need, but as examples, the decorative layer may be formed from one to three layers of paper, although more may be used if desired. The fewer are used, however, the greater the benefit that will be obtained, as the smaller number of layers of paper will result in lower overall cost of the finished product. The strengthening panel may be 0.76, 1.52 or 2.29 mm (.030, .060 or .090 inch) thick. The selection of the thickness may depend on any factors; one will of course be ensuring that the resultant product complies with any applicable fire rating or other codes applicable to the intended use of the product. Nonetheless, the invention is not limited to these specific thicknesses and combinations of thicknesses.

Again, while it is contemplated to effect direct thermal fusion of the saturated paper to the strengthening panel or core, it is within the broad scope of the invention to include one or more additional materials in contact with the paper and the core, either covering the contacting surfaces of the paper and core or located only here and there on those surfaces. Various such materials include what are known as a gator ply and as a receptor coat (the latter might, for example, be used to compensate for irregularities in the surface of the strengthening panel surface). Other materials, however, may also (or instead) be used without departing from the scope of the invention.

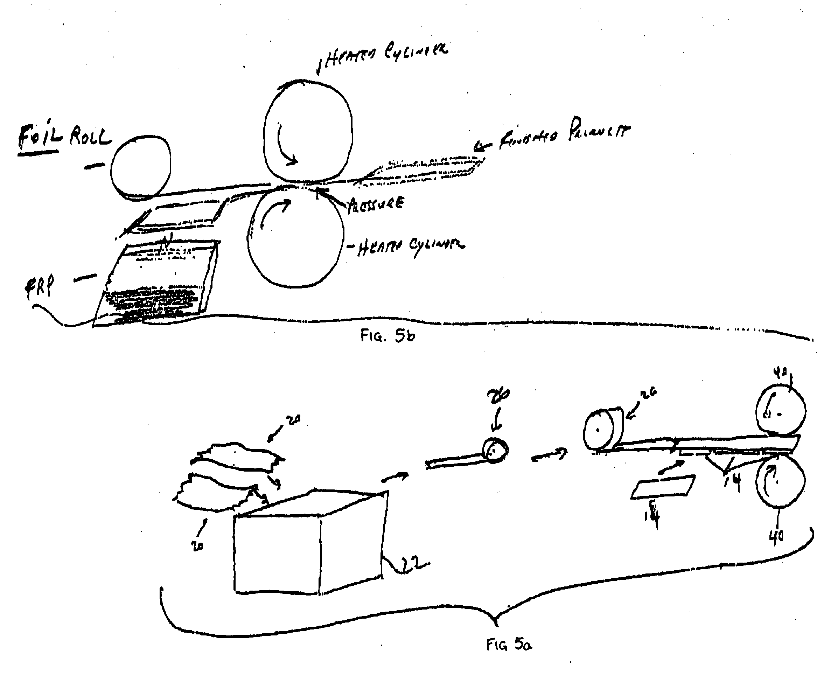

Figs. 5a and 5b show a further modification of the foregoing embodiments. According to Figs. 5a and 5b, the paper 20, after saturation with either preferred type of resin or with a preglue operation, results in a roll stock 26 (a "foil"). In this variation, the fusion of the two layers is achieved by rolling the layers together at a suitable temperature and pressure, rather than by pressing the two together in stationary fashion using standard thermofusing equipment. In Figs. 5a and 5b this is indicated schematically at 40, showing two rollers used for this purpose, pressing together stock from roll 26 and strengthening panels 14. The illustration of panels 14 as arriving from beneath the foil 26 is arbitrary, since those panels could be delivered and placed in contact with the surface of the foil from either above or below, using processing equipment and techniques that are well known.

The disclosure of this specification also includes the subject matter of US 2003/0157850 A1 as given below:

### REINFORCED DECORATIVE COMPOSITE MATERIAL

### BACKGROUND OF THE INVENTION

### 1. Field of the Invention

The present invention relates generally to construction materials and more particularly to a reinforced decorative composite material that includes a laminated material of the type called high pressure laminates ("HPL") and a strengthening panel such as fiberglass reinforced plastic ("FRP") adhered together, and to the manufacture of such a composite material.

### 2. Description of Related Art

High pressure laminate materials have been manufactured and sold for many years, and are familiar to many from their wide-spread use in kitchens and areas requiring very durable and decorative surface attributes. Such laminates are typically made of layers of paper impregnated with resin, compressed in a press or the like and heated to produce the desired laminate. One layer of paper may have a decorative pattern that remains visible in the finished product. The exact types of paper and of resins used, as well as the pressures, equipment and temperatures used, and the precise order of steps, are well known to those in the art. A great variety of products of this type are commercially available from the Formica Corporation, under the trademark Formica, owned by that company. Examples of techniques and materials used in the manufacture of such laminates can be found in U.S. Patent 5,558,906, assigned on its face to Formica Technology Inc., the entire disclosure of which is incorporated herein by reference, although it is to be understood that the present inventor does not claim ownership of the processes claimed in that patent, which are believed to be owned by that patent's assignee of record.

HPL products, however, are generally brittle enough that they must be mounted on a layer of wood or other material of sufficient strength and rigidity, for use in the kitchen, and on any horizontal surface. Vertical surface applications of HPL's would be enhanced by a pre-laminated panel with the HPL as the outward side. A primary application of the proposed panel would be vertical wall surfaces, where drywall is a common substrate.

It would be desirable to be able to use HPL products in environments where the product will be exposed to relatively high levels of wear and tear, moisture, and mechanical loads, without the need to mount the HPL on a mechanically strong layer of wood or other materials. For example, it would be desirable to be able to use decorative materials like HPL products in vertical wall applications in schools, hospitals, restaurants and other public areas that are subject to large amounts of traffic, and where conventional HPL cannot easily be used.

Also known are sheets of plastic reinforced with fiberglass, which have long been employed as surfaces that are resistant to abuse (that is, resistant to tearing and the like), and resistant to moisture as well. Such products are obtainable commercially, for example, from Kemlite Company, the assignee of the present invention, and some techniques and materials for use in for their manufacture are disclosed in commonly-assigned U.S. Patents 4,278,491, 4,110,151, 4,098,630 and 4,048,887, the entire disclosure of each of which patents is incorporated herein by reference. FRP products thus far typically have an embossed surface, are a solid color (typically white), and have a hard and shiny appearance that makes them unsuitable for uses where aesthetic appearance is of great concern.

### SUMMARY OF THE INVENTION

Accordingly, one object of the present invention is to provide a material that will have the aesthetic qualities of HPL and can be easily installed on vertical surfaces. It is also an object to provide such a material that will have sufficient mechanical strength for use in situations where conventional HPL products might not otherwise be usable, such as wall panel applications without a substantial structural substrate. Of primary importance, the present invention provides a panel which is installer-friendly and combines the custom color/pattern flexibility of an HPL face with a water-proof, dimensionally stable, user-friendly backer. Further, this laminated panel enhances the impact resistance and moisture resistance of known available decorative vertical wall panels. The subject panel will allow installation of an HPL vertical surface in a most expeditious manner saving labor costs in two ways: drywall preparation, and actual installation time of the panel, when compared to applying HPL directly over drywall.

These objects are met by the present invention, according to one aspect of which is a reinforced composite material that includes a laminate panel, a strengthening panel that includes a reinforcement embedded therein, and a layer of adhesive disposed between the laminate panel and the strengthening panel to adhere the laminate panel and the strengthening panel together. Preferably, the reinforcement in the strengthening panel may be fiberglass fibers, randomly oriented, or it may be provided in the form of a mesh or the like. In either case, the strengthening panel is preferably a plastic (polymeric) material of the type known as fiberglass reinforced polyester. The thicknesses of the layers may be selected according to need, but as examples, the HPL may be about .030 inch thick, and the strengthening panel may for example be .030, .060 or .090 inch thick, although the invention is not limited to these specific thicknesses and combinations of thicknesses.

The invention also provides a method for the production of such a material, in which there are provided a laminate panel of a type made by heating and compressing at least a first layer of paper and quantity of resin, and a strengthening panel of a type made by embedding a reinforcement in a layer of a binder material. Then, the laminate panel is adhered to the strengthening panel with a layer of adhesive. The adhesive may preferably be a contact cement or a hot melt adhesive.

These and other objects, features and advantages of the present invention will be more fully apparent from a consideration of the following detailed description of the preferred embodiments, taken in conjunction with the accompanying drawings.

### DESCRIPTION OF THE PREFERRED EMBODIMENTS

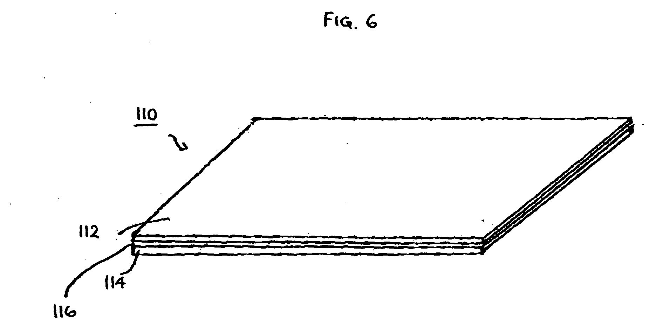

The first preferred embodiment of the present invention is a reinforced composite material 110 having three layers, as shown in Fig. 6. Two outer layers 112, 114 sandwich, and are secured together by, a third layer 116, of adhesive. One of the outer layers 112 is a HPL material, and the other of the outer layers 114 is a sheet or panel of a reinforced material. The intermediate layer 116 is of an adhesive material. The reinforced material may be a FRP material of a type available from Kemlite Company, while the other outer layer 112 is for example of a type available from the Formica Company. The exact choice of adhesive is not critical, and it is believed that many commercially available adhesives are suitable for adhering combinations of HPL and FRP materials in this fashion. The present inventor particularly contemplates, however, the use of a conventional contact cement or of a conventional hot-melt adhesive, a great number of both of which are known in the art, and detailed description of which is therefore not required. Nonetheless, the key quality of the adhesive used is not that it be either a contact cement or a hot-melt adhesive, nor that it be any other particular kind, but that it provide the bonding qualities necessary to bond securely with the particular HPL and FRP materials used in a given instance. The selection of the right adhesive for a particular choice of the outer layers, thus, is well within the ordinary skill in the art, and the use of any adhesive whatever that provides these qualities is within the scope of the invention.

While it is preferred to use a sheet of FRP material for the reinforcing sheet, it is also possible to use other types of reinforced plastic. For example, a plastic sheet 114' having reinforcing material in the form of a mesh 118', rather than in the form of randomly-oriented fiberglass 118, as in FRP, forms a second preferred embodiment of the invention. Figs. 7a and 7b indicate these two types of material for use in the composite material shown in Fig. 6. In addition, both types of reinforcement may be used together.

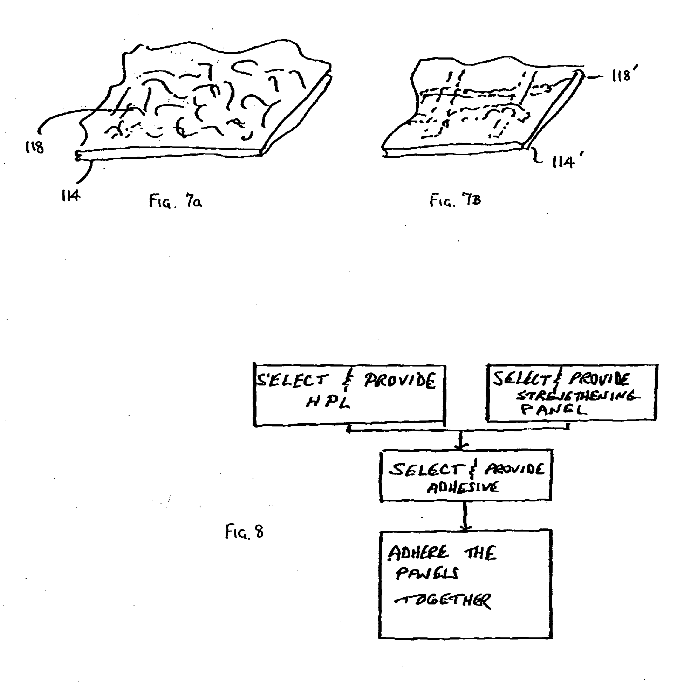

The method of manufacturing the composite material shown in Fig. 6 is straightforward, and is illustrated in Fig. 8. First, one selects the appropriate HPL and reinforced plastic materials to use as the outer layers. While these materials may be custom manufactured, either or both may be a commercially available material instead. Once these two materials have been formed, or otherwise provided, the appropriate materials and techniques for adhering the two layers to each other can be selected and used.

The thicknesses of the layers of the reinforced composite material may be selected according to need, but as examples, the HPL may be about .030 inch thick, and the strengthening panel may be .030, .060 or .090 inch thick, although the invention is not limited to these specific thicknesses and combinations of thicknesses.

While the present invention has been described in detail with reference to the currently-preferred embodiments, many modifications and variations of those embodiments will now be apparent to those skilled in the art. Accordingly, the scope of the invention is not to be limited by the details of the foregoing detailed description, but only by the terms of the following clauses numbered 1 through 18.
Clause 1. A reinforced composite material comprising:
   a laminate panel;
   a strengthening panel, the strengthening panel including a reinforcement embedded therein; and
   a layer of adhesive disposed between the laminate panel and the strengthening panel to adhere the laminate panel and the strengthening panel together.
Clause 2. The reinforced composite material as set forth in Clause 1,
   in which the strengthening panel further includes a sheet of plastic.
Clause 3. The reinforced composite material as set forth in Clause 2, in which the reinforcement is embedded in the sheet of plastic.
Clause 4. The reinforced composite material as set forth in Clause 2, in which the sheet of plastic is at least partially formed of a polyester copolymer.
Clause 5. The reinforced composite material as set forth in Clause 1, in which the strengthening panel is a sheet of fiberglass reinforced plastic.
Clause 6. The reinforced composite material as set forth in Clause 1, in which the reinforcement includes a plurality of fibers of a reinforcing material.
Clause 7. The reinforced composite material as set forth in Clause 6, in which the plurality of fibers of the reinforcing material are one of randomly oriented and oriented in a mesh within the strengthening panel.
Clause 8. The reinforced composite material as set forth in Clause 6, in which the plurality of fibers of the reinforcing material are at least partially formed of glass.
Clause 9. The reinforced composite material as set forth in Clause 1, in which the layer of adhesive includes a layer of a material selected from the group consisting of contact cement and hot melt adhesive.
Clause 10. A reinforced composite material comprising:
   a laminate panel;
   a strengthening panel including a fibrous reinforcement embedded in a polymeric material; and
   a layer of adhesive disposed between the laminate panel and the strengthening panel to adhere the laminate panel and the strengthening panel together.
Clause 11. The reinforced composite material as set forth in Clause 10, in which the fibrous reinforcement includes a plurality of fibers of glass.
Clause 12. A method of forming a reinforced composite material, the method comprising the steps of:
   forming a laminate panel by heating and compressing at least a first layer of paper and quantity of resin;
   forming a strengthening panel by embedding a reinforcement in layer of a binder material; and
   adhering the laminate panel to the strengthening panel with a layer of adhesive.
Clause 13. The method as set forth in Clause 12, in which the step of forming a strengthening panel includes the step of providing a sheet of fiberglass reinforced plastic.
Clause 14. The method as set forth in Clause 12, further comprising the steps of applying a layer of hot melt adhesive between the laminate panel and the strengthening panel and curing the layer of hot melt adhesive.
Clause 15. A method of forming a reinforced composite material, the method comprising the steps of:
   providing a laminate panel of a type made by heating and compressing at least a first layer of paper and quantity of resin;
   providing a strengthening panel of a type made by embedding a reinforcement in layer of a binder material; and
   adhering the laminate panel to the strengthening panel with a layer of adhesive.
Clause 16. The method as set forth in Clause 15, in which the strengthening panel is a sheet of fiberglass reinforced plastic.
Clause 17. The method as set forth in Clause 15, wherein said adhering step further comprises the steps of applying a layer of hot melt adhesive between the laminate panel and the strengthening panel and curing the layer of hot melt adhesive.
Clause 18. The method as set forth in Clause 15, wherein said adhering step further comprises the step of applying a layer of a contact cement between the laminate panel and the strengthening panel.

### SUMMARY OF THE DISCLOSURE OF US 2003/0157850 A1

A reinforced composite material includes a laminate panel, a strengthening panel that includes a reinforcement embedded therein, and a layer of adhesive disposed between the laminate panel and the strengthening panel to adhere the laminate panel and the strengthening panel together. Preferably, the reinforcement in the strengthening panel may be fiberglass fibers, randomly oriented, or it may be provided in the form of a mesh or the like. In either case, the strengthening panel is preferably a plastic (polymeric) material of the type known as fiberglass reinforced polyester. Also provided is a method for the production of such a material.

While the present invention has been described in detail with reference to the currently-preferred embodiments, many modifications and variations of those embodiments will now be apparent to those skilled in the art. Accordingly, the scope of the invention is not to be limited by the details of the foregoing detailed description, but only by the terms of the appended claims.

## Claims

1. A reinforced composite material comprising:
a decorative layer; and
a strengthening panel, the strengthening panel including a reinforcement embedded therein,
wherein the decorative layer and the strengthening panel are directly fused to each other.

2. A reinforced composite material comprising:
a decorative layer in the form of a foil; and
a strengthening panel, the strengthening panel including a reinforcement embedded therein,
wherein the decorative layer and the strengthening panel are thermally laminated to each other.

3. A reinforced composite material according to Claim 1 or Claim 2, wherein said decorative layer comprises resin-saturated paper.

4. A reinforced composite material according to Claim 3, wherein said paper is saturated with a resin selected from the group consisting of polyester resins and melamine resins.

5. A reinforced composite material according to Claim 2, wherein said decorative layer has one side preglued.

6. A method for making a reinforced composite material according to Claim 1, comprising the steps of:
providing a foil and a strengthening panel; and
laminating the foil and the strengthening panel to each other under application of heat and pressure.

7. A method for making a reinforced composite material according to claim 2, comprising the steps of:
providing a foil and a strengthening panel;
pregluing one side of the foil; and
laminating the foil and the strengthening panel to each other under application of heat and pressure.

8. A method according to claim 6 or claim 7, wherein the application of pressure is performed using rollers.

9. A method according to claim 8, wherein at least one of the rollers is heated.
